# EUROPÄISCHE PATENTSCHRIFT

(11) **EP 2 162 321 B1**
(45) Veröffentlichungstag und Bekanntmachung des Hinweises auf die Patenterteilung: **31.12.2014**
(21) Anmeldenummer: 08759333.1
(22) Anmeldetag: 24.06.2008
(51) Int. Cl.: B60S 1/38, B60S 1/52

(54) **FLACHES WISCHBLATT**
FLAT WIPER BLADE
BALAI D'ESSUIE-GLACE PLAT

(30) Priorität: 27.06.2007 DE 102007030169
(43) Veröffentlichungstag der Anmeldung: 17.03.2010
(73) Patentinhaber: Valeo Systèmes d'Essuyage, 78321 La Verrière (FR)
(72) Erfinder: SCHÄUBLE, Michael, 71665 Vaihingen/Enz (DE); EGNER-WALTER, Bruno, 74076 Heilbronn (DE)
(74) Vertreter: Vötsch, Reiner
(86) Internationale Anmeldenummer: PCT/EP2008/005091
(87) Internationale Veröffentlichungsnummer: WO 2009/000498

(56) Entgegenhaltungen:
- WO-A-2007/124989
- DE-A1- 1 952 855
- DE-A1- 4 319 139
- DE-A1- 10 312 979
- DE-A1- 10 350 274
- DE-A1- 19 835 065
- GB-A- 2 044 161
- US-A1- 2006 265 830

## Beschreibung

Die Erfindung betrifft ein flaches Wischblatt für Scheibenwischanlagen nach dem Oberbegriff der beiden unabhängigen Ansprüche 1 und 2.

Ein derartiges Wischblatt ist aus der DE 103 50 274 A1 bekannt. Bei dem bekannten Wischblatt ist ein Profilteil vorgesehen, das ein spoilerartiges Element aus Kunststoff aufweist, in dem eine aus Metall bestehende, als Verstärkung dienende Armierung angeordnet ist Die einstückige Armierung besteht aus in Querrichtung des Wischblatts angeordneten, krallenartige Fortsätze aufweisende Einzelelemente, die durch in Längsrichtung des Wischblatts verlaufende Verbindungsstege miteinander verbunden sind. Die Herstellung eines derartigen, als Stanz-/Biegeteil ausgebildeten Verstärkungselements ist relativ aufwendig. Weiterhin sind mehrere Fertigungsschritte zum Herstellen des Profilteils erforderlich, da zunächst das Verstärkungselement hergestellt werden muss, das anschließend in einem zweiten Fertigungsschritt in ein Spritzgußwerkzeug eingelegt werden muss, um von dem Kunststoff des spoilerartigen Elements umspritzt zu werden.

Aus der nachveröffentlichten WO 2007/124989 A1 ist darüber hinaus ein Wischblatt nach dem Oberbegriff des Anspruchs 1 bekannt, dessen Profilteil aus zwei aus Kunststoff bestehenden Elementen mit unterschiedlicher Härte besteht.

Aus der US 2006/0265830 A1 ist ein Wischblatt bekannt, bei dem im Wischgummi ein durchgehender Längsschlitz vorgesehen ist, der eine Aufnahme für eine Federschiene ausbildet. Durch den durchgehenden Längsschlitz wird eine relativ einfache Montage der Federschiene erzielt, jedoch ist Steifigkeit bzw. der Torsionswiderstand des Wischblatts durch den durchgehenden Längsschlitz reduziert.

Aus der DE 43 19 139 A1 ist darüber hinaus ein Wischgummi bekannt, der während eines Produktionsschrittes einen Schlitz im Bereich der Aufnahme für eine Federschiene aufweist. Dieser Schlitz wird jedoch noch während der Fertigung des Wischgummis, das heißt vor dem Einschieben einer Federschiene in die Ausnehmung, geschlossen, indem die beiden gegenüberliegenden Stirnseiten des Schlitzes im noch erwärmten Zustand gegeneinander gepresst werden, so dass sich diese miteinander verbinden.

Bekannt sind weiterhin flache Wischblätter (DE 100 07 800 A1, DE 100 14 803 A1, DE 100 00 381 A1), die zusätzlich zu dem vom Wischgummi mit Wischlippe und von mehreren Federschienen gebildeten Wischteil auch ein die Oberseite des Wischblattes bildendes Profilteil aufweisen, welches beispielsweise als Spoiler geformt und/oder mit wenigstens einem Kanal mit Spritzöffnungen für ein flüssiges Reinigungs- oder Spritzmedium (z.B. Wasser, bevorzugt mit Reinigungs- und/oder Frostschutzmitteln) ausgebildet ist. Um eine sichere Befestigung am Wischgummi zu gewährleisten und außerdem während des Wischbetriebes eine zusätzliche stabilisierende Wirkung für das Wischblatt zu erreichen das jeweilige Profilteil insgesamt aus einem relativ harten Kunststoff, d.h. aus einem Kunststoff mit einer im Vergleich zum Wischgummi sehr viel geringeren Elastizität hergestellt ist, z.B. aus PP.

Nachteilig ist hier u.a., dass der Kunststoff eines solchen Profilteils unter Temperatureinfluss seine physikalischen Eigenschaften, insbesondere auch seine Festigkeitseigenschaften ändert, so dass durch den relativ großen Kunststoffanteil des Profilteils die Wischeigenschaften des Wischblattes insgesamt, insbesondere auch die von der wenigstens einen Federschiene erzeugte Wischblattanpresskraft und die Verteilung dieser Anpresskraft entlang der Wischlippe von der Temperatur negativ beeinflusst werden. Außerdem wirkt sich auch das Kriechen des Kunststoffmaterials negativ auf die Wischeigenschaften des Wischblattes aus. So tritt beispielsweise bei gegen eine Fahrzeugscheibe anliegendem und dadurch gestreckten Wischblatt eine entsprechende bleibende Verformung des Profilteils ein, die (bleibende Verformung) dann im Wischbetrieb der von der Federschiene erzeugten Anpresskraft der Wischlippe entgegenwirkt. Wird andererseits das Wischblatt beispielsweise während der Winterzeit von der Fahrzeugscheibe weggeklappt, so kann es durch die Kriechwirkung des Kunststoffs unter der von der Federschiene erzwungenen konkaven Krümmung des Wischblattes zu einer bleibenden Verformung des aus Kunststoff gefertigten Profilteils in diesem Sinne kommen. In allen vorgenannten Fällen wirkt sich also der hohe Kunststoffanteil bzw. das hohe Kunststoffvolumen des Profilteils negativ auf die Wischwirkung aus.

Aufgabe der Erfindung ist es, ein flaches Wischblatt nach dem Oberbegriff der Ansprüche 1 und 2 derart weiterzubilden, dass bei einfacher Herstellbarkeit des Profilteils eine relativ große Steifigkeit bzw. großer Torsionswiderstand des Wischblatts ermöglicht wird. Zur Lösung dieser Aufgabe ist ein Wischblatt entsprechend dem Patentanspruch 1 oder 2 ausgebildet. Der Erfindung liegt dabei der Gedanke zugrunde, das Profilteil aus zwei, eine unterschiedliche Härte aufweisenden Profilabschnitten aus Kunststoff auszubilden, wobei der eine größere Härte aufweisende Profilabschnitt leistenartig ausgebildet ist und das Wischgummi im Bereich der Federschiene umgreift.

Weiterbildungen, Vorteile und Anwendungsmöglichkeiten der Erfindung ergeben sich auch aus der nachfolgenden Beschreibung von Ausführungsbeispielen und aus den Figuren. Die Erfindung wird im Folgenden anhand der Figuren näher erläutert:
- Fig. 1: in perspektivischer Darstellung ein flaches Wischblatt gemäß der Erfindung in gestreckter Form;
- Fig. 2: das Wischblatt der Figur 1 in einer perspektivischen Explosionsdarstellung;
- Fig. 3: einen Schnitt durch das Wischblatt der Figur 1;
- Fig. 4 - 7: Darstellungen wie Figur 3 bei weiteren Ausführungsformen;
- Fig. 8: eine Darstellung ähnlich Figur 2, jedoch bei geteiltem Profilteil;
- Fig. 9: eine Darstellung wie Figur 2 bei einer weiteren Ausführungsform der Erfindung;
- Fig. 10: einen Schnitt durch das Wischblatt der Figur 9;
- Fig. 11 - 14: Darstellungen wie Figur 10 bei weiteren Ausführungsformen;
- Fig. 15: eine Darstellung wie Figur 9, jedoch bei geteiltem Profilteil des Wischblattes,
- Fig. 16: das aus dem Wischgummi und der Federschiene bestehende Wischteil zusammen mit mehreren unterschiedlichen Profilteilen;
- Fig. 17: eine Darstellung wie Figur 16, jedoch bei weiteren Ausführungsformen der Erfindung.

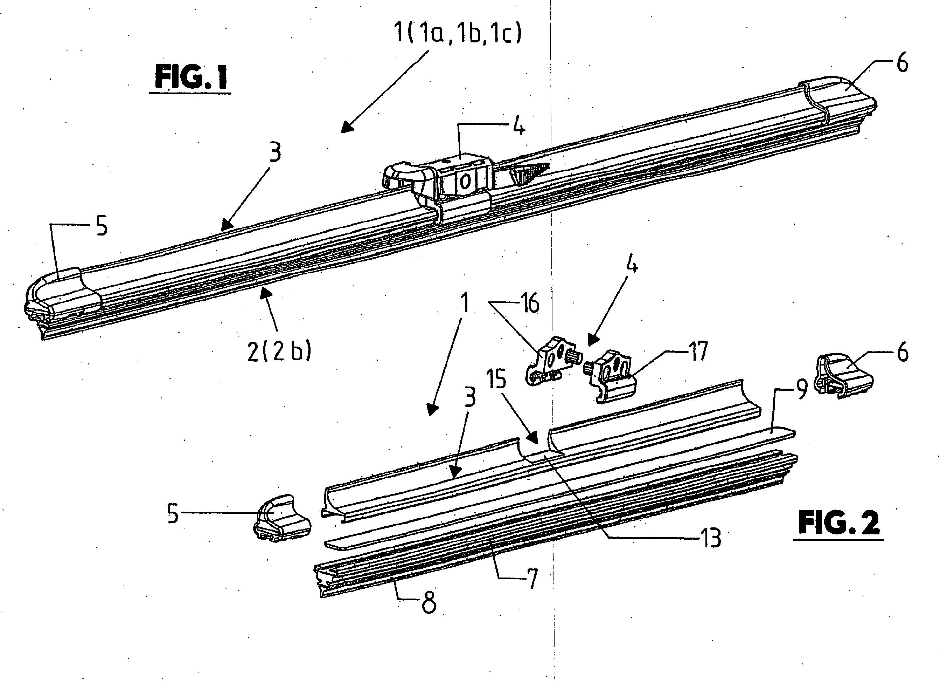

In den Figuren 1 - 3 ist 1 ein flaches Wischblatt für Fahrzeugscheiben, beispielsweise für Fahrzeugfront- und/oder Heckscheiben. Das Wischblatt 1 ist in der Figur 1 im gestreckten Zustand dargestellt, d.h. so dargestellt ist, wie es im Funktionszustand auf einer ebenen Scheibe aufliegen würde. Das Wischblatt 1, welches im entlasteten, d.h. von der Fahrzeugscheibe abgehobenen Zustand aber an seiner der Fahrzeugscheibe zugewandten Seite in der üblichen Weise konkav gewölbt ist, besteht bei der dargestellten Ausführungsform im Wesentlichen aus einem Wischteil 2, aus einem Profilteil 3, aus einem Adapter 4 insbesondere zum Verbinden des Wischblattes 1 mit einem nicht dargestellten Wischarm einer Scheibenwischanlage sowie aus zwei z.B. als Formteile aus Kunststoff hergestellten End- und/oder Abschlussstücken 5 und 6, die jeweils den Abschluss des Wischblattes 1 an einem Ende bilden und u.a. an dem betreffenden Ende das Wischteil 2 und das Profilteil 3 miteinander verbinden. Zumindest eines der beiden Endstücke 5 und 6 kann auch noch weitere Funktionen aufweisen, beispielsweise als Verschlusselement zum Verschließen von im Wischblatt 1 ausgebildeten Spritzkanälen für ein flüssiges Reinigungs- oder Spritzmedium.

Im Detail ist das Wischteil 2 des Wischblattes 1 in der üblichen Weise von einem aus einem gummielastischen Material, beispielsweise aus einem gummielastischen Kunststoffprofil hergestellten Wischgummi 7 mit angeformter Wischlippe 8 und einer Federschiene 9 gebildet, die leistenförmig aus einem federnden Flachmaterial, beispielsweise aus Federstahl hergestellt ist und die die für das Anliegen der Wischlippe 8 gegen die Fahrzeugscheibe notwendige Vorspannung erzeugt. Die Federschiene 9, die sich ebenso wie der Wischgummi 7 mit der Wischlippe 8 über die gesamte Länge des Wischblattes 1 erstreckt, ist mit seinen größeren Oberflächenseiten in Ebenen senkrecht zu einer Mittelebene M angeordnet, zu der der Wischgummi 7 und die Wischlippe 8 spiegelsymmetrisch ausgebildet sind. Zur Aufnahme der Federschiene 9 weist der Wischgummi 7 an seiner der Wischlippe 8 abgewandten Oberseite eine an den rechteckförmigen Querschnitt der Federschiene 9 angepasste Ausnehmung 10 auf, die an der Oberseite des Wischgummis über einen sich über die gesamte Länge des Wischgummis 7 erstreckenden und in der Mitte der Wischgummioberseite, d.h. im Bereich der Mittelebene M vorgesehenen Schlitz 11 offen ist. Mit dem Schlitz 11 ist eine vereinfachte Montage der Federschiene 9 in der Ausnehmung 10 durch "Einknüpfen" möglich. Die Ausnehmung 10 ist in einem Profilabschnitt 12 des Wischgummis 7 gebildet, an dem (Profilabschnitt) der Wischgummi 7 eine vergrößerte Breite aufweist.

Das Profilteil 3 ist bei der dargestellten Ausführungsform aus zwei unterschiedlichen Materialkomponenten aus Kunststoff hergestellt, und zwar beispielsweise durch Koextrusion als Mehrkomponentenstrangprofil oder aber in einem Zweikomponenten-Spritzgießverfahren. Eine Komponente aus einem härteren Kunststoff, beispielsweise aus PP bildet einen stabilisierenden, C-förmigen Profilabschnitt 13, der bei montiertem Wischblatt 1 das Wischteil 2 an seiner Oberseite bzw. am Profilabschnitt 12 formschlüssig übergreift und hierdurch u.a. den Abschnitt 12 auch im Bereich des Schlitzes 11 zusammenhält, d.h. ein Aufklaffen dieses Schlitzes 11 verhindert. Der Profilabschnitt 13, der dem Profilteil 3 die erforderliche Stabilität verleit, besteht hierfür aus den beiden C-förmig umgebogenen Schenkelabschnitten 13.1, die jeweils einen von dem verbreiterten Profilabschnitt 12 gebildeten überstehenden Randbereich des Wischgummis 7 übergreifen, sowie aus dem die beiden Schenkelabschnitte 13.1 verbindenden Jochabschnitt 13.2, der gegen die Oberseite des Wischgummis 7 anliegt und auch den Schlitz 11 überlappt. Weiterhin besteht das Profilteil 3 aus einem spoilerartig ausgebildeten und an den Profilabschnitt 13 angeformten Abschnitt 14, der aus einem Kunststoffmaterial hergestellt ist, welches eine im Vergleich zum Profilabschnitt 13 geringere Steifigkeit aufweist, beispielsweise aus einem thermoplastischen Elastomer, z.B. aus Santoprene hergestellt ist.

Ein wesentliches Merkmal des Wischblattes 1 besteht darin, dass der Profilabschnitt 13 relativ dünnwandig ausgebildet ist und der Materialquerschnitt und damit auch das Materialvolumen des Profilabschnittes 13 nur einen geringen Anteil des Gesamtquerschnitts bzw. Gesamtmaterialvolumens des Profilteils 3 und auch des Wischteils 2 ausmacht, d.h. der Querschnitt bzw. das Materialvolumen des Profilabschnittes 13 sind auf jeden Fall kleiner als 20 % des Gesamtquerschnitts oder -volumens des Profilteils 3 und des Wischteils 2. Unabhängig hiervon sind aber u.a. die Dicke des Profilabschnittes 13 sowie auch das Material für diesen Profilabschnitt so gewählt, dass für das Profilteil 3 die erforderliche Stabilität erreicht wird.

Durch den geringen Volumenanteil des Kunststoffmaterials des Profilabschnittes 13 können temperaturabhängige Änderungen der Festigkeit des Profilabschnittes 13 und/oder durch Kriechen des Kunststoffmaterial bedingte bleibende Verformungen dieses Profilabschnittes die Gesamteigenschaft des Wischblattes 1 und insbesondere auch seine Wischfunktion nicht nachteilig beeinflussen.

Etwa in der Mitte des Wischblattes 1 ist der Profilabschnitt 14 bei 15 ausgespart, und zwar zur Aufnahme des Adapters 4, der bei der dargestellten Ausführungsform aus zwei Formteilen 16 und 17 aus Kunststoff oder einem anderen geeigneten Material, z.B. Metall besteht, und zwar derart, dass die Formteile 16 und 17 den in der Aussparung 15 freiliegenden Profilabschnitt 13 an den beiden Schenkeln 13.1 und am Jochabschnitt 13.2 formschlüssig übergreifen. Der Profilabschnitt 13 dient somit auch zur großflächigen Übertragung von während des Wischbetriebes auf den Wischgummi 7 einwirkenden Kräften auf den Adapter 4.

Über den das Profilteil 3 im Bereich der Aussparung 15 reiterartig übergreifenden Adapter 4 wird weiterhin nicht nur die Befestigung des Wischblattes 1 an dem nicht dargestellten Wischarm erreicht, sondern zugleich auch eine Stabilisierung des Profilabschnittes 13 gegen ein Ausweichen bzw. ein Auseinanderbewegen der Schenkel 13.1. In gleicher Weise wirken auch die beiden, den Profilabschnitt 13 ebenfalls übergreifenden End oder Abschlussstücke 5 und 6, was ebenfalls zu einer möglichen Redzierung des Materialvolumens des Profilabschnittes 13 beiträgt.

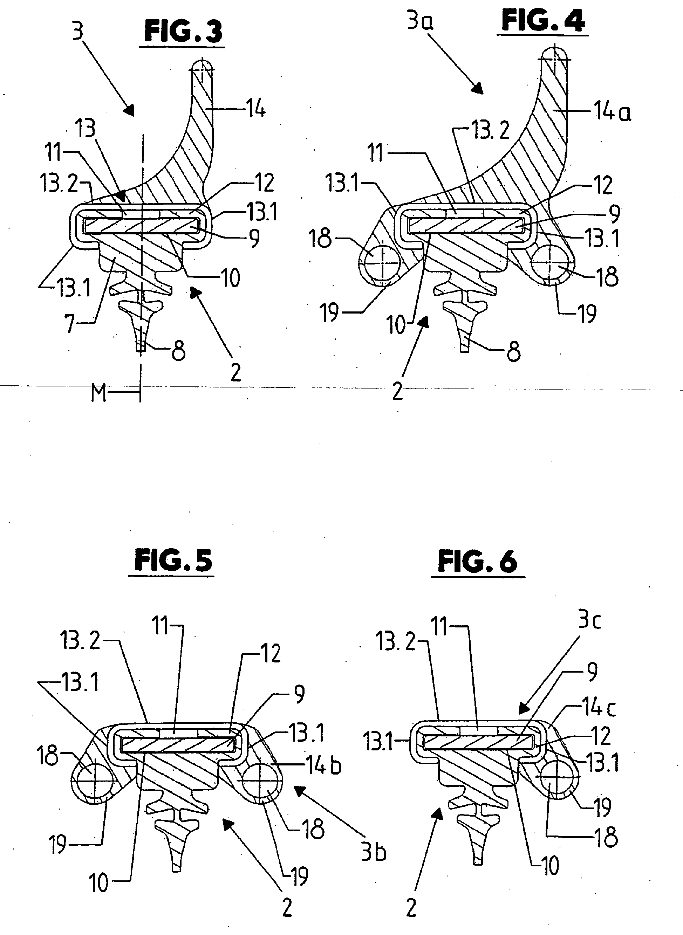

Wie in den Figuren 4 - 7 dargestellt, kann bei gleicher Ausbildung des Wischteils 2 das Profilteil sehr unterschiedlich gestaltet werden. So zeigt die Figur 4 ein Profilteil 3a, bei dem der spoilerartige Profilabschnitt 14a mit zwei jeweils sich in Wischblattlängsrichtung erstreckenden Spritzkanälen 18 mit Spritzöffnungen 19 für ein flüssiges Reinigungs- oder Spritzmedium ausgebildet ist.

Die Figur 5 zeigt ein Profilteil 3b, welches ohne eine spoilerartige Ausbildung an den Profilabschnitt 14b die beiden Kanäle 18 mit den Spritzöffnungen 19 aufweist.

Die Figur 6 zeigt eine Ausführung, die sich von der Ausführung der Figur 5 dadurch unterscheidet, dass der Profilabschnitt 14c des Profilteils 3c lediglich mit einem Kanal 18 mit Spritzöffnungen 19 ausgeführt ist.

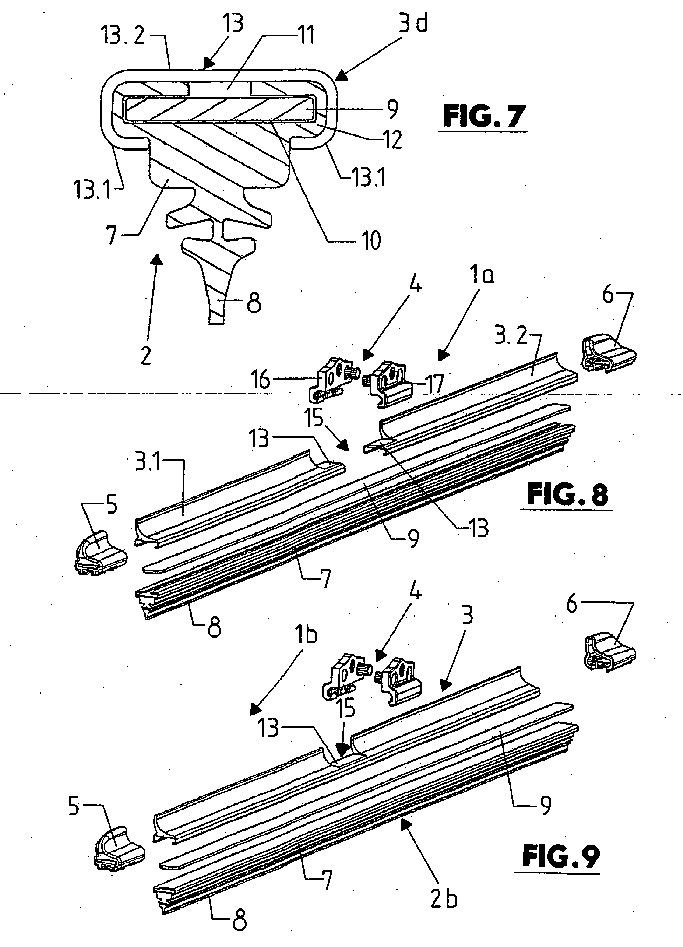

Die Figur 7 zeigt schließlich eine Ausführungsform, bei der das Profilteil 3d auf den Profilabschnitt 13 reduziert ist.

Sämtliche in den Figuren 4 - 7 dargestellten Ausführungsformen ist gemeinsam, dass das jeweilige, auf dem Wischteil 2 vorgesehene Profilteil 3a - 3d den vorbeschriebenen Profilabschnitt 13 als stabilisierendes Element aufweist und dass der Profilabschnitt 14a - 14c, soweit vorhanden, wiederum aus dem im Vergleich zum Material des Profilabschnittes 13 (z.B. PP) sehr viel weicheren Material, beispielsweise aus dem thermoplastischen Elastomer, z.B. Santoprene besteht. Die Profilteile 3b - 3d der Figuren 5 - 7 eignen sich insbesondere für Wischblätter bzw. Fahrzeuge, bei denen Hochgeschwindigkeitsanforderungen gering sind. Ebenso eignen sich diese Ausführungsformen auch für Wischblätter für Heckscheibenwischanlagen.

Die Figur 8 zeigt in einer Darstellung wie Figur 2 ein Wischblatt 1 a, welches sich vom Wischblatt 1 im Wesentlichen nur dadurch unterscheidet, dass-das Profilteil 3 bzw. dessen Profilabschnitt 13 im Bereich der Aussparung 15 geteilt ist, sodass zwei Profilteilabschnitte 3.1 und 3.2 erhalten sind, die sich in entgegengesetzten Richtungen vom Adapter 4 wegerstrecken und über den Adapter 4 miteinander verbunden sind.

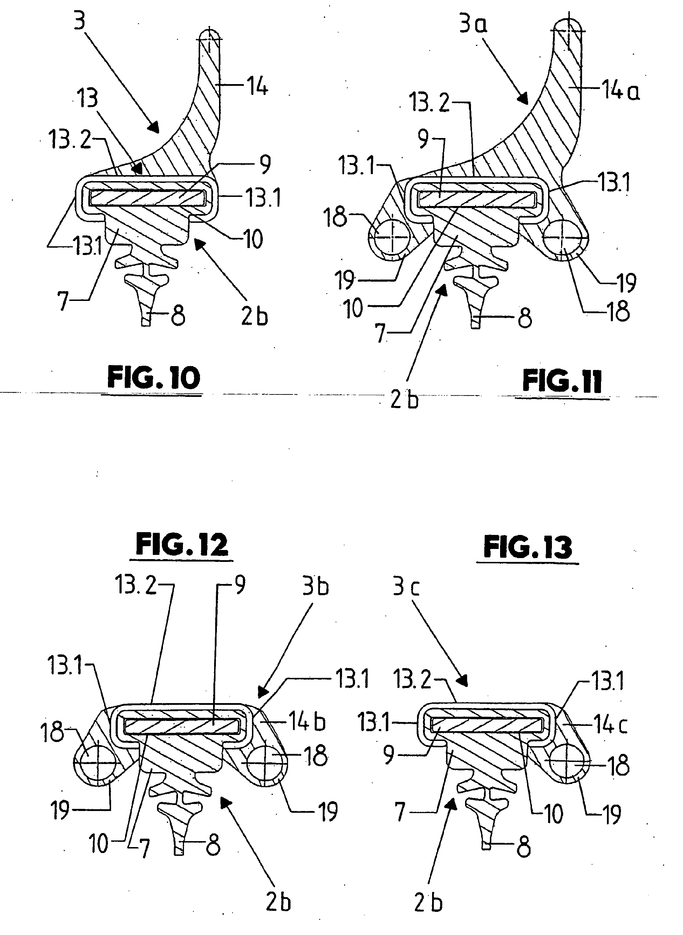

Die Figuren 9 und 10 zeigen als weitere Ausführungsform ein Wischblatt 1 b, welches sich von dem Wischblatt 1 im Wesentlichen nur dadurch unterscheidet, dass der Wischgummi 7 des Wischteils 2b den Schlitz 11 nicht aufweist, d.h. die in dem Wischgummi 7 zur Aufnahme der Federschiene 9 dienende Ausnehmung 10 auch an der Oberseite des Wischgummis 7 geschlossen und die Federschiene 9 bei dem Wischblatt 1 b somit axial in die Ausnehmung 10 eingeschoben ist oder aber die beim Herstellen des Wischteils 2b mit dem Material des Wischgummis 7 umspritzt ist. Auf dem Wischteil 2b ist entsprechend den Figuren 9 und 10 wiederum das Profilteil 3 bestehend aus dem Profilabschnitt 13 und dem spoilerartigen Profilabschnitt 14 vorgesehen. Auch bei dieser Ausführungsform kann aber das Wischteil 2b mit unterschiedlichen Profilteilen kombiniert sein, beispielsweise mit den vorbeschriebenen Profilteilen 3a - 3d, wie dies auch die Figuren 11 - 14 zeigen.

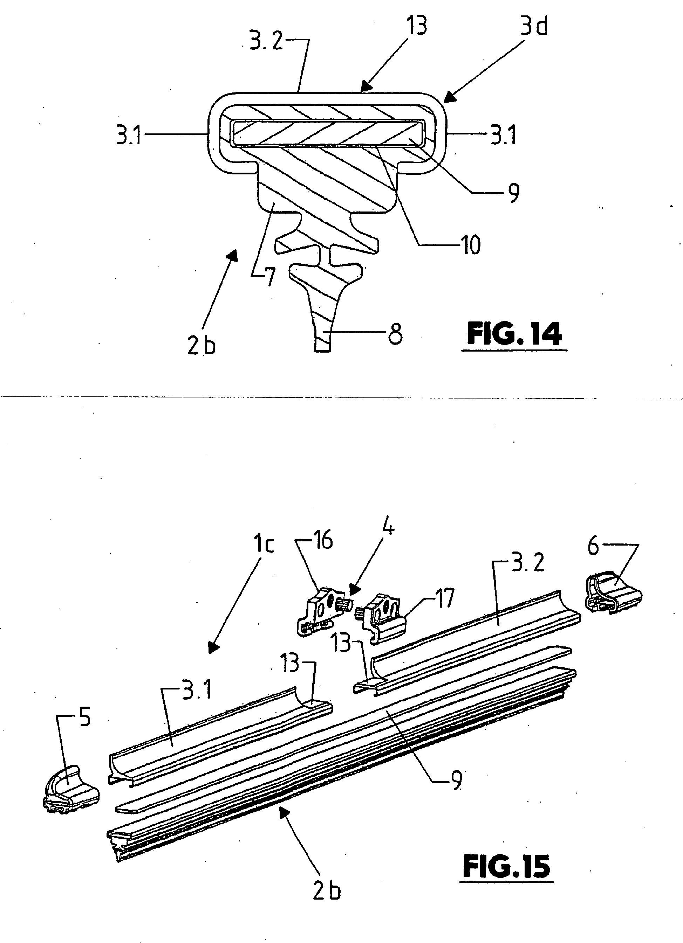

In der Figur 15 ist als weitere Ausführungsform ein Wischblatt 1c dargestellt, welches sich von dem Wischblatt 1 b wiederum nur dadurch unterscheidet, dass das jeweilige Profilteil, nämlich beispielsweise das Profilteil 3 im Bereich der Aussparung 15 geteilt ist, sodass sich wiederum die Profilteilabschnitte 3.1 - 3.2 ergeben.

Die Befestigung des Profilteils 3, 3a - 3c auf dem Wischteil 2 bzw. 2b erfolgt jeweils durch Aufschieben oder Aufrasten.

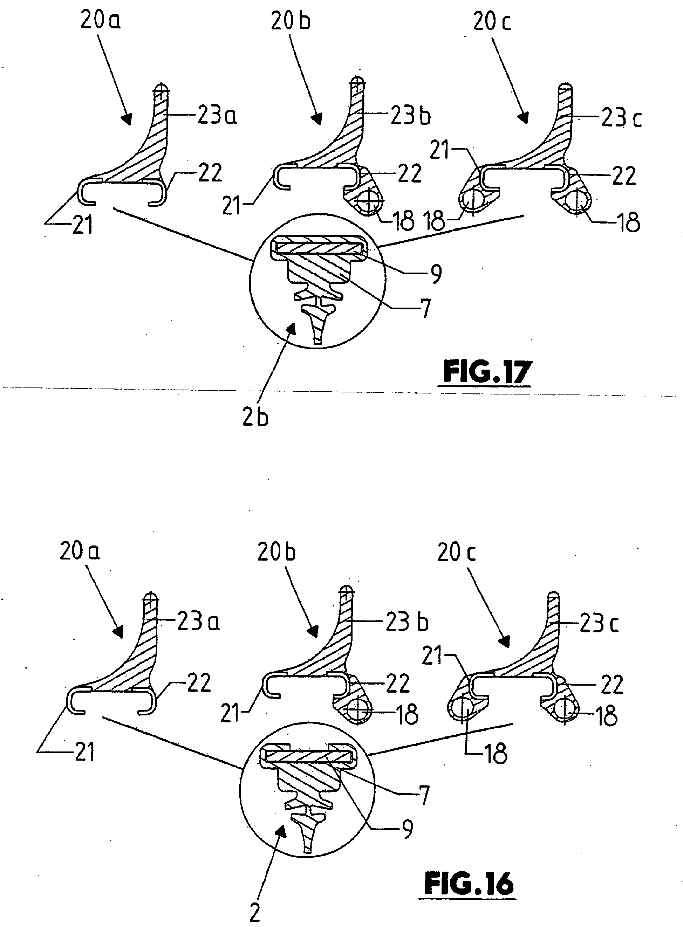

In der Figur 16 ist nochmals das Wischteil 2 bestehend aus dem Wischgummi 7 mit der Federschiene 9 dargestellt, wobei der Wischgummi 7 die Ausnehmung 10 mit dem Schlitz 11 aufweist. Dargestellt sind in der Figur 16 weiterhin im Schnitt verschiedene Profilteile 20a - 20c; die wahlweise mit dem Wischteil 2 verwendet werden können.

Sämtlichen Profilteilen 3a - 3c ist gemeinsam, dass zur noch weiteren Reduzierung des Materialanteils des stabilisierenden Elementes der Profilteile anstelle des Profilabschnittes 13 lediglich zwei getrennte U- oder C-förmige leistenartige Profilabschnitte 21 und 22 vorgesehen sind, die hinsichtlich ihrer Formgebung den Schenkeln 13.1 des Profilabschnittes 13 entsprechen und bei montiertem Wischblatt das Wischteil 2 an den von dem Abschnitt 12 gebildeten leistenartigen Vorsprüngen übergreifen.

Die leistenartigen Profilabschnitte 21 und 22 sind bei dem Profilteil 20a an einem spoilerartigen Profilabschnitt 23a angeformt, bei dem Profilteil 20b an einem spoilerartigen und zugleich auch einen Kanal 18 mit Spritzöffnungen 19 bildenden Profilabschnitt 23b und bei dem Profilteil 20c an einem Profilabschnitt 23c mit zwei Kanälen 18 mit Spritzöffnungen 19 an beiden Wischblattlängsseiten. Die Profilabschnitte 23a - 23c bestehen wiederum aus einem im Vergleich zum Kunststoffmaterial der Profilabschnitte 21 und 22 sehr viel weicheren Kunststoff, beispielsweise aus dem thermoplastischen Elastomer z.B. Santoprene. Durch den in der Figur 16 nicht dargestellten Adapter 4 in der Mitte des jeweiligen Wischblattes sowie durch die in dieser Figur ebenfalls nicht dargestellten End-und/oder Abschlussstücke 5 und 6 sind auch bei diesen Ausführungsformen die leistenartigen stabilisierenden Profilabschnitte 21 und 22 zusätzlich zusammengehalten.

Die Figur 17 zeigt nochmals im Schnitt das aus dem Wischgummi 7 und aus der in der geschlossenen Ausnehmung 10 aufgenommenen Federschiene 9 bestehende Wischteil 2b, welches ebenfalls wahlweise mit den Profilteilen 20a - 20c verwendbar ist.

Bei den Ausführungsformen der Figuren 16 und 17 erfolgt die Herstellung des Wischblattes ebenfalls durch Aufschieben oder Aufrasten des Profilteils 20a - 20c auf das Wischteil 2 bzw. 2b.

Die Erfindung wurde voranstehend an Ausführungsbeispielen beschrieben. Es verseht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1, 1a, 1b, 1c: Wischblatt
- 2, 2b: Wischteil
- 3, 3a - 3d: Profilteil
- 3.1, 3.2: Profilteilabschnitt
- 4: Adapter
- 5,6: Endstück
- 7: Wischgummi
- 8: Wischlippe
- 9: Federschiene
- 10: Ausnehmung für Federschiene 9
- 11: Schlitz
- 12: verbreiteter Profilabschnitt des Wischgummis 7
- 13: Profilabschnitt aus hartem Kunststoff
- 13.1: C-förmige Schenkel
- 13.2: Jochabschnitt
- 14, 14a - 14c: Profilabschnitt aus weichem Kunststoff
- 15: Aussparung
- 16,17: Formteil
- 18: Reinigungs- oder Spritzkanal
- 19: Düsenöffnung
- 20a - 20c: Profilteil
- 21, 22: Profilabschnitt aus hartem Kunststoff
- 23a - 23c: Profilabschnitt aus weichem Kunststoff
- M: Mitteleben

## Patentansprüche

1. Flaches Wischblatt für Scheibenwischanlagen mit einem Wischteil (2, 2b), welches von wenigstens einem Wischgummi (7) mit zumindest einer Wischlippe (8) und von wenigstens einer in einer Ausnehmung (10) des Wischgummis (7) aufgenommenen und von diesem umschlossenen Federschiene (9) gebildet ist, sowie mit wenigstens einem Adapter (4) zum Befestigen des Wischblattes (1, 1a - 1c) an einem Wischarm, wobei ein das Wischteil (2, 2b) an seiner der wenigstens einen Wischlippe (8) abgewandten Oberseite formschlüssig übergreifendes und sich über die gesamte oder nahezu die gesamte Wischblattlänge erstreckendes Profilteil (3, 3a - 3c, 20a - 20c) vorgesehen ist, welches wenigstens einen sich über die gesamte oder nahezu die gesamte Wischblattlänge erstreckenden Profilabschnitt (13, 21, 22) aus einem im Vergleich zum Material des Wischgummis (7) härteren Material als stabilisierendes Element aufweist, und wobei der Querschnitt dieses stabilisierenden Profilabschnitts (13, 21, 22) über die gesamte Wischblattlänge, zumindest aber über den größeren Teil der Wischblattlänge deutlich kleiner ist als der Querschnitt des Wischgummis (7) und/oder eines weiteren Profilabschnitts (14, 14a - 14c, 23a - 23c) des Profilteils (3, 3a - 3c, 20a - 20c),
**dadurch gekennzeichnet,**
**dass** der stabilisierende Profilabschnitt (13, 21, 22) und der weitere Profilabschnitt (14, 14a - 14c, 23a - 23c) jeweils aus Kunststoff besteht, wobei das Material des Profilabschnitts (13, 21, 22) härter ist als das Material des weiteren Profilabschnitts (14, 14a - 14c, 23a - 23c), dass der wenigstens eine weitere Profilabschnitt (14, 14a - 14c, 23b - 23c) des Profilteils (3, 3a - 3c, 20a - 20c) einen vorzugsweise Düsenöffnungen (19) aufweisenden Kanal (18) für ein flüssiges Reinigungs- oder Spritzmedium aufweist, und dass entweder ein einziger stabilisierender Profilabschnitt (13) vorgesehen ist, der C-förmig ausgebildet ist, wobei der stabilisierende Profilabschnitt (13) mit zwei über einen Jochabschnitt (13.2) miteinander verbundene Schenkel (13.1) den Wischgummi (7) an seiner der wenigstens einen Wischlippe (8) entfernt liegenden Oberseite formschlüssig übergreift, oder dass im Bereich der der wenigstens einen Wischlippe (8) entfernt liegenden Oberseite des Wischgummis (7) wenigstens zwei leistenartige, sich jeweils entlang einer Längsseite des Wischgummis (7) erstreckende stabilisierende Profilabschnitte (21, 22) vorgesehen sind.

2. Flaches Wischblatt für Scheibenwischanlagen mit einem Wischteil (2, 2b), welches von wenigstens einem Wischgummi (7) mit zumindest einer Wischlippe (8) und von wenigstens einer in einer Ausnehmung (10) des Wischgummis (7) aufgenommenen und von diesem umschlossenen Kederschiene (9) gebildet ist, sowie mit wenigstens einem Adapter (4) zum Befestigen des Wischblattes (1, 1a - 1c) an einem Wischarm, wobei ein das Wischteil (2, 2b) an seiner der wenigstens einen Wischlippe (8) abgewandten Oberseite formschlüssig übergreifendes und sich über die gesamte oder nahezu die gesamte Wischblattlänge erstreckendes Profilteil (3, 3a - 3c) vorgesehen ist, welches wenigstens einen sich über die gesamte oder nahezu die gesamte Wischblattlänge erstreckenden Profilabschnitt (13) aus einem im Vergleich zum Material des Wischgummis (7) härteren Material als stabilisierendes Element aufweist, und wobei der Querschnitt dieses stabilisierenden Profilabschnitts (13) über die gesamte Wischblattlänge, zumindest aber über den größeren Teil der Wischblattlänge deutlich kleiner ist als der Querschnitt des Wischgummis (7) und/oder eines weiteren Profilabschnitts (14, 14a - 14c) des Profilteils (3, 3a - 3c),
**dadurch gekennzeichnet,**
**dass** der stabilisierende Profilabschnitt (13) und der weitere Profilabschnitt (14, 14a - 14c) jeweils aus Kunststoff besteht, wobei das Material des Profilabschnitts (13, 21, 22) härter ist als das Material des weiteren Profilabschnitts (14, 14a - 14c), dass ein einziger Profilabschnitt (13) vorgesehen ist, der C-förmig ausgebildet ist, und dass der stabilisierende Profilabschnitt (13) mit zwei über einen Jochabschnitt (13.2) miteinander verbundene Schenkel (13.1) den Wischgummi (7) an seiner der wenigstens einen Wischlippe (8) entfernt liegenden Oberseite formschlüssig übergreift.

3. Wischblatt nach Anspruch 1 oder 2, **dadurch gekennzeichnet, dass** das Profilteil (3, 3a - 3c; 20a - 20c) aus dem wenigstens einen stabilisierenden Profilabschnitt (13, 21, 22) und aus dem weiteren, beispielsweise als Spoiler geformten Profilabschnitt (14, 14a - 14c; 23a - 23c) besteht, der aus einem im Vergleich zu dem stabilisierenden Profilabschnitt (13, 21, 22) sehr viel weicheren Material gefertigt ist.

4. Wischblatt nach einem der Ansprüche 1 bis 3, **dadurch gekennzeichnet, dass** das Materialvolumen des wenigstens einen stabilisierenden Profilabschnittes (13, 21, 22) im Wischblatt deutlich kleiner ist als das Materialvolumen des Wischgummis (7) und/oder des weiteren Profilabschnittes (14, 14a - 14c; 23a - 23c) des Profilteils (3, 3a - 3c; 20a - 20c).

5. Wischblatt nach einem der Ansprüche 1 bis 4, **dadurch gekennzeichnet, dass** der wenigstens eine stabilisierende Profilabschnitt (13, 21, 22) aus PP besteht.

6. Wischblatt nach einem der Ansprüche 1 bis 5, **dadurch gekennzeichnet, dass** der weitere Profilabschnitt (14, 14a - 14c; 23a - 23c) aus einem thermoplastischen Elastomer, z.B. Santoprene besteht.

7. Wischblatt nach einem der Ansprüche 1 bis 6, **dadurch gekennzeichnet, dass** der Adapter (4) den wenigstens einen stabilisierenden Profilabschnitt (13, 21, 22) formschlüssig übergreift.

8. Wischblatt nach einem der Ansprüche 1 bis 7, **dadurch gekennzeichnet, dass** die wenigstens eine Federschiene (9) in einer geschlossenen Ausnehmung (10) des Wischgummis (7) aufgenommen ist.

9. Wischblatt nach einem der Ansprüche 1 bis 7, **dadurch gekennzeichnet, dass** die wenigstens eine Federschiene (9) in einer Ausnehmung (10) des Wischgummis (7) aufgenommen ist, die an der der Wischlippe (8) abgewandten Oberseite des Wischgummis (7) im Bereich eines Schlitzes (11) offen ist.

10. Wischblatt nach Anspruch 9, **dadurch gekennzeichnet, dass** das Wischteil (2b) im Bereich des Schlitzes (11) von dem Profilteil (3, 3a- 3d; 20a - 20c) und dabei vorzugsweise von dem stabilisierenden Profilabschnitt (13) übergriffen wird.

11. Wischblatt nach einem der Ansprüche 1 bis 10, **dadurch gekennzeichnet, dass** an wenigstens einem Wischblattende ein End- oder Abschlussstück (5, 6) vorgesehen ist, welches das Profilteil (3, 3a - 3d; 20a - 20c) zur Stabilisierung des wenigstens einen stabilisierenden Profilabschnittes (13, 21, 22) übergreift.

12. Wischblatt nach einem der Ansprüche 1 bis 11, **dadurch gekennzeichnet, dass** das Profilteil (3, 3a - 3d; 20a - 20c) im Bereich des wenigstens einen Adapters (4) derart ausgespart ist, dass dort der wenigstens eine stabilisierenden Profilabschnitt (13, 21, 22) für ein unmittelbares Übergreifen durch den Adapter (4) freiliegt.

13. Wischblatt nach Anspruch 12, **dadurch gekennzeichnet, dass** das Profilteil (3, 3a - 3d; 20a - 20c) im Bereich der Aussparung (15) geteilt ist.

14. Wischblatt nach einem der Ansprüche 1 bis 13, **dadurch gekennzeichnet, dass** das Profilteil (3, 3a - 3d; 20a- 20c) durch Koextrusion hergestellt ist.

## Claims

1. Flat wiper blade for windscreen wiper systems, with a wiper part (2, 2b) which is formed by at least one wiper blade rubber (7) having at least one wiping lip (8) and by at least one spring rail (9) which is accommodated in a recess (10) of the wiper blade rubber (7) and is surrounded by the latter, and with at least one adapter (4) for fastening the wiper blade (1, 1a - 1c) to a wiper arm, wherein a profile part (3, 3a - 3c, 20a - 20c) is provided which engages in a form-fitting manner over the wiper part (2, 2b), on the upper side thereof facing away from the at least one wiping lip (8), and extends over the entire or virtually the entire wiper blade length and has, as stabilizing element, at least one profile section (13, 21, 22) which extends over the entire or virtually the entire wiper blade length and is composed of a material which is harder in comparison to the material of the wiper blade rubber (7), and wherein the cross section of said stabilizing profile section (13, 21, 22) over the entire wiper blade length, but at least over the greater part of the wiper blade length, is significantly smaller than the cross section of the wiper blade rubber (7) and/or of a further profile section (14, 14a - 14c, 23a - 23c) of the profile part (3, 3a - 3c, 20a - 20c),
**characterized**
**in that** the stabilizing profile section (13, 21, 22) and the further profile section (14, 14a - 14c, 23a - 23c) are in each case composed of plastic, wherein the material of the profile section (13, 21, 22) is harder than the material of the further profile section (14, 14a - 14c, 23a - 23c), in that the at least one further profile section (14, 14a - 14c, 23b - 23c) of the profile part (3, 3a - 3c, 20a - 20c) has a channel (18), which preferably has nozzle openings (19), for a liquid cleaning or spraying medium, and in that either a single stabilizing profile section (13) which is of C-shaped design is provided, wherein the stabilizing profile section (13) engages in a form-fitting manner over the wiper blade rubber (7), on the upper side thereof remote from the at least one wiping lip (8), by means of two limbs (13.1) which are connected to each other via a yoke section (13.2), or in that at least two strip-like stabilizing profile sections (21, 22) which each extend along a longitudinal side of the wiper blade rubber (7) are provided in the region of the upper side of the wiper blade rubber (7), which upper side is remote from the at least one wiping lip (8).

2. Flat wiper blade for windscreen wiper systems, with a wiper part (2, 2b) which is formed by at least one wiper blade rubber (7) having at least one wiping lip (8) and by at least one spring rail (9) which is accommodated in a recess (10) of the wiper blade rubber (7) and is surrounded by the latter, and with at least one adapter (4) for fastening the wiper blade (1, 1a - 1c) to a wiper arm, wherein a profile part (3, 3a - 3c) is provided which engages in a form-fitting manner over the wiper part (2, 2b), on the upper side thereof facing away from the at least one wiping lip (8), and extends over the entire or virtually the entire wiper blade length and has, as stabilizing element, at least one profile section (13) which extends over the entire or virtually the entire wiper blade length and is composed of a material which is harder in comparison to the material of the wiper blade rubber (7), and wherein the cross section of said stabilizing profile section (13) over the entire wiper blade length, but at least over the greater part of the wiper blade length, is significantly smaller than the cross section of the wiper blade rubber (7) and/or of a further profile section (14, 14a - 14c) of the profile part (3, 3a - 3c),
**characterized**
**in that** the stabilizing profile section (13) and the further profile section (14, 14a - 14c) are in each case composed of plastic, wherein the material of the profile section (13, 21, 22) is harder than the material of the further profile section (14, 14a - 14c), in that a single profile section (13) which is of C-shaped design is provided, and in that the stabilizing profile section (13) engages in a form-fitting manner over the wiper blade rubber (7), on the upper side thereof remote from the at least one wiping lip (8), by means of two limbs (13.1) which are connected to each other via a yoke section (13.2).

3. Wiper blade according to Claim 1 or 2, **characterized in that** the profile part (3, 3a - 3c; 20a - 20c) consists of the at least one stabilizing profile section (13, 21, 22) and of the further profile section (14, 14a - 14c; 23a - 23c) which is formed, for example, as a spoiler and is manufactured from a very much softer material in comparison to the stabilizing profile section (13, 21, 22).

4. Wiper blade according to one of Claims 1 to 3, **characterized in that** the material volume of the at least one stabilizing profile section (13, 21, 22) in the wiper blade is significantly smaller than the material volume of the wiper blade rubber (7) and/or of the further profile section (14, 14a - 14c; 23a - 23c) of the profile part (3, 3a - 3c; 20a - 20c).

5. Wiper blade according to one of Claims 1 to 4, **characterized in that** the at least one stabilizing profile section (13, 21, 22) is composed of PP.

6. Wiper blade according to one of Claims 1 to 5, **characterized in that** the further profile section (14, 14a - 14c; 23a - 23c) is composed of a thermoplastic elastomer, for example Santoprene.

7. Wiper blade according to one of Claims 1 to 6, **characterized in that** the adapter (4) engages in a form-fitting manner over the at least one stabilizing profile section (13, 21, 22).

8. Wiper blade according to one of Claims 1 to 7, **characterized in that** the at least one spring rail (9) is accommodated in a closed recess (10) of the wiper blade rubber (7).

9. Wiper blade according to one of Claims 1 to 7, **characterized in that** the at least one spring rail (9) is accommodated in a recess (10) of the wiper blade rubber (7), which recess is open in the region of a slot (11) on the upper side of the wiper blade rubber (7), which upper side faces away from the wiping lip (8).

10. Wiper blade according to Claim 9, **characterized in that** the wiper part (2b) is engaged over in the region of the slot (11) by the profile part (3, 3a - 3d; 20a - 20c) and preferably by the stabilizing profile section (13).

11. Wiper blade according to one of Claims 1 to 10, **characterized in that** an end or terminating piece (5, 6) which engages over the profile part (3, 3a - 3d; 20a - 20c) in order to stabilize the at least one stabilizing profile section (13, 21, 22) is provided at at least one wiper blade end.

12. Wiper blade according to one of Claims 1 to 11, **characterized in that** the profile part (3, 3a - 3d; 20a - 20c) is recessed in the region of the at least one adapter (4) in such a manner that the at least one stabilizing profile section (13, 21, 22) is exposed there for direct engaging over by the adapter (4).

13. Wiper blade according to Claim 12, **characterized in that** the profile part (3, 3a - 3d; 20a - 20c) is divided in the region of the recess (15).

14. Wiper blade according to one of Claims 1 to 13, **characterized in that** the profile part (3, 3a - 3d; 20a - 20c) is produced by co-extrusion.

## Revendications

1. Balai d'essuie-glace plat pour des systèmes d'essuie-glace avec une partie de balai (2, 2b), qui est formée d'au moins une lame en caoutchouc (7) avec au moins une lèvre d'essuyage (8) et d'au moins une latte élastique (9) logée dans une cavité (10) de la lame en caoutchouc (7) et enveloppée par celle-ci, ainsi qu'avec au moins un adaptateur (4) destiné à fixer le balai d'essuie-glace (1, 1a-1c) à un bras de monture d'essuie-glace, dans lequel il est prévu une partie de profilé (3, 3a-3c, 20a-20c) recouvrant par emboîtement la partie de balai (2, 2b) sur son côté supérieur orienté à l'opposé de ladite au moins une lèvre d'essuyage (8) et s'étendant sur toute ou presque toute la longueur du balai d'essuie-glace, qui présente au moins une portion de profilé (13, 21, 22) s'étendant sur toute ou presque toute la longueur du balai d'essuie-glace en un matériau plus dur que le matériau de la lame en caoutchouc (7) comme élément stabilisateur, et dans lequel la section transversale de cette portion de profilé stabilisateur (13, 21, 22) est nettement plus petite, sur toute la longueur du balai d'essuie-glace, mais au moins sur la plus grande partie de la longueur du balai d'essuie-glace, que la section transversale de la lame en caoutchouc (7) et/ou d'une autre portion de profilé (14, 14a-14c, 23a-23c) de la partie de profilé (3, 3a-3c, 20a-20c), **caractérisé en ce que** la portion de profilé stabilisateur (13, 21, 22) et l'autre portion de profilé (14, 14a-14c, 23a-23c) se composent respectivement de matière plastique, dans lequel le matériau de la portion de profilé (13, 21, 22) est plus dur que le matériau de l'autre portion de profilé (14, 14a-14c, 23a-23c), **en ce que** ladite au moins une autre portion de profilé (14, 14a-14c, 23b-23c) de la partie de profilé (3, 3a-3c, 20a-20c) présente un canal (18) comportant de préférence des orifices de buses (19) pour un fluide liquide de nettoyage ou de pulvérisation, et **en ce qu'**il est prévu soit une seule portion de profilé stabilisateur (13), qui est réalisée en forme de C, dans lequel la portion de profilé stabilisateur (13) recouvre par emboîtement avec deux branches (13.1) reliées l'une à l'autre par une portion de monture (13.2) la lame en caoutchouc (7) sur son côté supérieur éloigné de ladite au moins une lèvre d'essuyage (8), soit **en ce qu'**il est prévu dans la région du côté supérieur de la lame en caoutchouc (7) éloigné de ladite au moins une lèvre d'essuyage (8) au moins deux portions de profilé stabilisateur (21, 22) en forme de latte, qui s'étendent respectivement le long d'un long côté de la lame en caoutchouc (7).

2. Balai d'essuie-glace plat pour des systèmes d'essuie-glace avec une partie de balai (2, 2b), qui est formée d'au moins une lame en caoutchouc (7) avec au moins une lèvre d'essuyage (8) et d'au moins une latte élastique (9) logée dans une cavité (10) de la lame en caoutchouc (7) et enveloppée par celle-ci, ainsi qu'avec au moins un adaptateur (4) destiné à fixer le balai d'essuie-glace (1, 1a-1c) à un bras de monture d'essuie-glace, dans lequel il est prévu une partie de profilé (3, 3a-3c) recouvrant par emboîtement la partie de balai (2, 2b) sur son côté supérieur orienté à l'opposé de ladite au moins une lèvre d'essuyage (8) et s'étendant sur toute ou presque toute la longueur du balai d'essuie-glace, qui présente au moins une portion de profilé (13) s'étendant sur toute ou presque toute la longueur du balai d'essuie-glace en un matériau plus dur que le matériau de la lame en caoutchouc (7) comme élément stabilisateur, et dans lequel la section transversale de cette portion de profilé stabilisateur (13) est nettement plus petite, sur toute la longueur du balai d'essuie-glace, mais au moins sur la plus grande partie de la longueur du balai d'essuie-glace, que la section transversale de la lame en caoutchouc (7) et/ou d'une autre portion de profilé (14, 14a-14c) de la partie de profilé (3, 3a-3c), **caractérisé en ce que** la portion de profilé stabilisateur (13) et l'autre portion de profilé (14, 14a-14c) se composent respectivement de matière plastique, dans lequel le matériau de la portion de profilé (13, 21, 22) est plus dur que le matériau de l'autre portion de profilé (14, 14a-14c), **en ce qu'**il est prévu une seule portion de profilé (13), qui est réalisée en forme de C, et **en ce que** la portion de profilé stabilisateur (13) recouvre par emboîtement avec deux branches (13.1) reliées l'une à l'autre par une portion de monture (13.2) la lame en caoutchouc (7) sur son côté supérieur éloigné de ladite au moins une lèvre d'essuyage (8).

3. Balai d'essuie-glace selon la revendication 1 ou 2, **caractérisé en ce que** la partie de profilé (3, 3a-3c; 20a-20c) se compose de ladite au moins une portion de profilé stabilisateur (13, 21, 22) et de l'autre portion de profilé (14, 14a-14c; 23a-23c) façonnée par exemple en forme de déflecteur, qui est fabriquée en un matériau beaucoup plus souple que la portion de profilé stabilisateur (13, 21, 22).

4. Balai d'essuie-glace selon l'une quelconque des revendications 1 à 3, **caractérisé en ce que** le volume de matériau de ladite au moins une portion de profilé stabilisateur (13, 21, 22) dans le balai d'essuie-glace est nettement plus petit que le volume de matériau de la lame en caoutchouc (7) et/ou de l'autre portion de profilé (14, 14a-14c; 23a-23c) de la partie de profilé (3, 3a-3c; 20a-20c).

5. Balai d'essuie-glace selon l'une quelconque des revendications 1 à 4, **caractérisé en ce que** ladite au moins une portion de profilé stabilisateur (13, 21, 22) se compose de PP.

6. Balai d'essuie-glace selon l'une quelconque des revendications 1 à 5, **caractérisé en ce que** l'autre portion de profilé (14, 14a-14c; 23a-23c) se compose d'un élastomère thermoplastique, par exemple de Santoprène.

7. Balai d'essuie-glace selon l'une quelconque des revendications 1 à 6, **caractérisé en ce que** l'adaptateur (4) recouvre par emboîtement ladite au moins une portion de profilé stabilisateur (13, 21, 22).

8. Balai d'essuie-glace selon l'une quelconque des revendications 1 à 7, **caractérisé en ce que** ladite au moins une latte élastique (9) est logée dans une cavité fermée (10) de la lame en caoutchouc (7).

9. Balai d'essuie-glace selon l'une quelconque des revendications 1 à 7, **caractérisé en ce que** ladite au moins une latte élastique (9) est logée dans une cavité (10) de la lame en caoutchouc (7), qui est ouverte dans la région d'une fente (11) sur le côté supérieur de la lame en caoutchouc (7) orienté à l'opposé de la lèvre d'essuyage (8).

10. Balai d'essuie-glace selon la revendication 9, **caractérisé en ce que** la partie d'essuyage (2b) est recouverte dans la région de la fente (11) par la partie de profilé (3, 3a-3d; 20a-20c) et en l'occurrence de préférence par la portion de profilé stabilisateur (13).

11. Balai d'essuie-glace selon l'une quelconque des revendications 1 à 10, **caractérisé en ce qu'**il est prévu, à au moins une extrémité du balai d'essuie-glace, une pièce d'extrémité ou de fermeture (5, 6), qui recouvre la partie de profilé (3, 3a-3d; 20a-20c) pour la stabilisation de ladite au moins une portion de profilé stabilisateur (13, 21, 22).

12. Balai d'essuie-glace selon l'une quelconque des revendications 1 à 11, **caractérisé en ce que** la partie de profilé (3, 3a-3d; 20a-20c) est évidée dans la région dudit au moins un adaptateur (4) de telle manière que ladite au moins une portion de profilé stabilisateur (13, 21, 22) y soit dégagée en vue d'un recouvrement direct par l'adaptateur (4).

13. Balai d'essuie-glace selon la revendication 12, **caractérisé en ce que** la partie de profilé (3, 3a-3d; 20a-20c) est divisée dans la région de l'évidement (15).

14. Balai d'essuie-glace selon l'une quelconque des revendications 1 à 13, **caractérisé en ce que** la partie de profilé (3, 3a-3d; 20a-20c) est fabriquée par co-extrusion.
